# EUROPEAN PATENT SPECIFICATION

(11) **EP 1 561 007 B1**
(45) Date of publication and mention of the grant of the patent: **11.10.2006**
(21) Application number: 02781537.2
(22) Date of filing: 15.11.2002
(51) Int. Cl.: F01D 5/14, F01D 17/16, F02B 37/22

(54) **VARIABLE NOZZLE FOR TURBOCHARGER**
VARIABLE DÜSE FÜR TURBOLADER
INJECTEUR AJUSTABLE POUR TURBOCOMPRESSEUR

(43) Date of publication of application: 10.08.2005
(73) Proprietor: Honeywell International, Inc., Morristown, New Jersey 07962 (US)
(72) Inventor: JECKEL, Denis, c/o Honeywell Garrett, 88150 Thaon-les-Vosges (FR)
(74) Representative: TBK-Patent
(86) International application number: PCT/IB2002/004812
(87) International publication number: WO 2004/046509

(56) References cited:
- WO-A-02/06636
- FR-A- 1 414 362
- US-A- 4 324 526
- US-A- 4 378 194
- US-A- 4 932 835
- PATENT ABSTRACTS OF JAPAN vol. 011, no. 168 (M-594), 29 May 1987 (1987-05-29) & JP 62 000696 A (TOSHIBA CORP), 6 January 1987 (1987-01-06)

## Description

The present invention relates to a variable nozzle device, a variable geometry compressor and a turbocharger using the same, which are applicable to turbochargers, superchargers and electrically assisted/driven compressors. In particular, the invention relates to a variable nozzle device, a variable geometry compressor and a turbocharger using the same, which are actuated by an integrated actuator.

In a conventional turbocharger for use in association with internal combustion engines, a compressor using a vaneless diffuser is known. The conventional compressor is driven by a power generated by the exhaust gas driven turbine wherein a turbine wheel of the exhaust gas driven turbine is mounted on a common shaft with a compressor impeller of the inlet air compressor.

The conventional compressor is provided with a housing having a compressed air outlet for supplying the inlet air to the inlet of the engine. The nozzle for passing through the inlet air from the compressor inlet to the compressor outlet is mostly provided as a vaneless diffuser.

Such compressors applied to gasoline engines (and to a certain extent to diesel engines) are limited by the compressor map width.

Reference JP 62 000696 A discloses a compressor having the features of the preamble of claim 1.

It is the object of the present invention to provide a variable geometry compressor having a wider compressor map width, with the manufacturing costs being low.

The object is solved by a compressor having features of claim 1.

Further developments of the invention are set forth in the dependent claims.

A variable nozzle device according to the invention comprises an annular arrangement of vanes disposed in a nozzle formed between an inner wall and an outer wall forming a passage therebetween, wherein at least one vane or a portion thereof is movable into and out of said passage substantially in the direction of the interval between the inner and the outer wall.

Preferably, the movable portion slides on a stationary portion of the vane.

Preferably, one of the stationary portion and movable portion is thicker than the other one of the stationary portion and movable portion, and is arranged on an upstream side of the passage.

Preferably, the other one of the stationary portion and movable portion has a wing-like cross-sectional shape and is arranged on a downstream side of the passage.

Preferably, the position of the movable portion of the vane is adjustable in the passage corresponding to the pressure at the inlet and/or outlet of the passage.

Preferably, the movable portion of the vane is movable in and out of the passage in response to a change of the pressure at the inlet and/or outlet of the passage.

Preferably, the movable portion of the vane is supported on a diaphragm defining a pressure chamber communicated to a pressure changing device.

Preferably, the diaphragm is provided with a spring member urging the movable portion of the vane into the passage.

A compressor according to the present invention includes an impeller urging a fluid through a nozzle having a passage with at least one vane extending therein, wherein at least one portion of the vane is movable in and out of the passage.

A turbocharger according to the present invention comprises a compressor according to the above definition.

Preferred embodiments of the invention are explained by way of examples with reference to the accompanying drawings.

Fig. 1 shows a first embodiment of the inventive nozzle device and the variable geometry compressor using the same in a closed position.

Fig. 2 shows the first embodiment of the nozzle device and the variable geometry compressor using the same in an open position.

Fig. 3 shows the second embodiment of a vane of a variable geometry compressor in an open position.

Fig. 4 shows the second embodiment of the vane of the variable geometry compressor in an closed position.

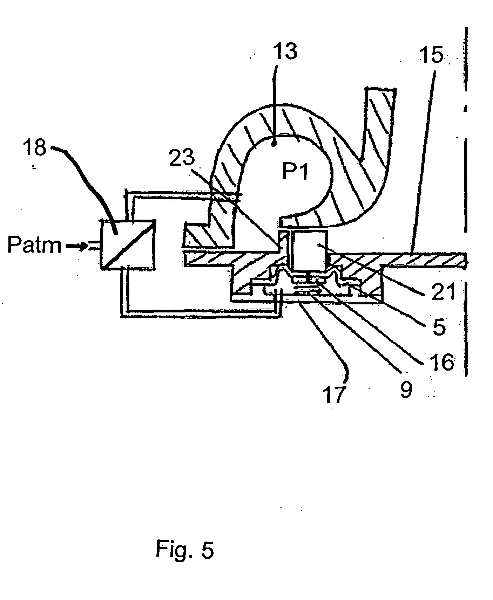

Fig. 5 shows the compressor and an integrated actuator according to the present invention in greater detail.

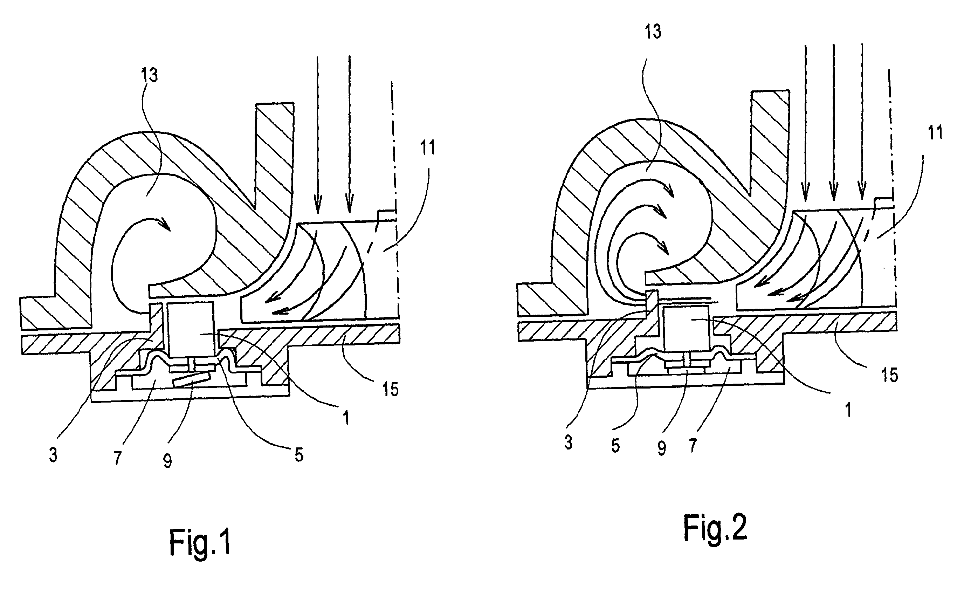

A first embodiment of the present invention is explained with reference to Figs. 1 and 2.

Fig. 1 and Fig. 2 show a variable nozzle device and a variable geometry compressor using the same, applicable to a turbocharger. In the figures, a passage is formed radially around a wheel 11 of a compressor. Radially outside said passage, a volute 13 is formed for passing through inlet air as a working fluid. A nozzle is arranged between the passage and the volute 13.

The wheel 11 is rotably supported by a shaft (not shown) radially inside the passage. In the nozzle, multiple vanes 1, 3 are disposed for directing the flow passing through the passage. Each vane comprises a movable portion 1 which is movable relative to a stationary portion 3 of the vane which is fixedly mounted on a wall 15 of a housing.

The movable portion 1 of the vane 1, 3 is movable in the axial direction with respect to the wheel 11 and is disposed adjacent to the stationary portion 3 of the vane 1, 3.

For cost reasons, the movable portion 1 of the vane preferably slides with respect to the stationary portion 3 of the vane. Thus, no rotating vanes are necessary in order to avoid a complex and expensive mechanism for rotating the vanes. Since the temperature of the compressor can be maintained comparatively low, it is possible that the variable mechanism is made of plastic materials which further decreases the manufacturing costs of the compressor.

The operation and the function of the variable nozzle device and the variable geometry compressor using the same will be described below.

As is shown in Fig. 1, at a low rotational speed of the compressor, when a low air flow is passing through, the vanes 1,3 are closed. Thereby, the compressor maintains a small diffuser function for an increased boost pressure and a small compressor stage.

As is shown in Fig. 2, at a higher rotational speed of the compressor, when a higher air flow is passing through, the vanes 1,3 are opened. Thereby, the compressor has a larger diffuser function for a wider range and a bigger compressor stage.

It is to be noted that, in the figures, the position of the stationary portion 3 of the vane is merely shown in a schematic manner, but it is obvious from Fig. 2 that the stationary portion 3 of the vane is not changed even when the nozzle is opened.

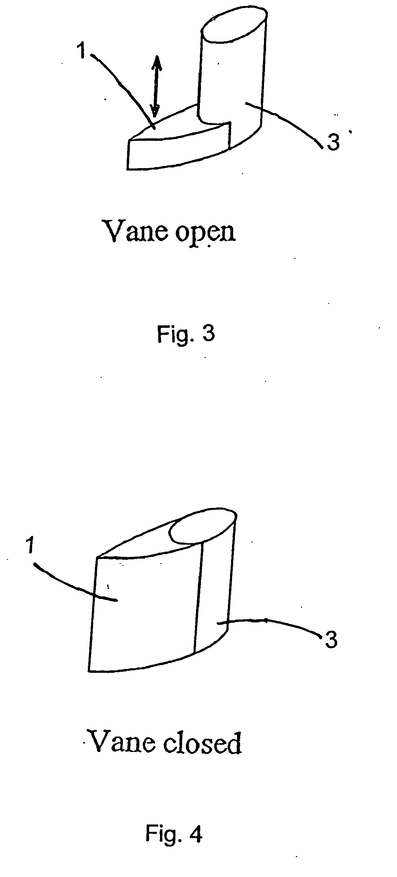

Fig. 3 and Fig. 4 show a schematic view of the vane 11, 23 of a nozzle and a variable geometry compressor using the same according to a second embodiment of the present invention.

The vanes 11, 23 each comprise a stationary portion 23 and a movable portion 21. In Fig. 3, the movable portion 21 is moved in the axial direction with respect to the wheel 11 toward the pressure chamber 7 such that the opened position is achieved. In Fig. 4, the movable portion 21 is moved away from the pressure chamber 7 such that the closed position is achieved.

The stationary portion 23 has a wing-like cross-sectional shape for a stabilized air flow. The controllability of the nozzle and the variable geometry compressor using the same is improved by the adjunction of the stationary wings 23 in line with the vanes 21, which can also be integrated in a backplate of the housing 15 for cost reasons.

By providing the wing-shaped stationary portions 3 of the vanes, the flow is kept in a stabilized condition even if the movable portion 1 is moved to open the passage in a short period of time.

The wings in line with the vanes 21, 23 help to avoid a sudden air flow section gap and also stabilize the air flow when the vanes 21, 23 start to open. Thereby, a step for the engine controller can be prevented and the controllability of the system is enhanced.

In contrast thereto, when conventional vanes just start to open, the air flow section in the compressor is suddenly increased to such a degree that the engine controller has difficulties in properly controlling the compressor so that a step is perceived by the controller, where a linear function should be a target for a good control.

Preferably, the vanes 21, 23 are designed such that they comprise a thicker part and a thinner part. In this embodiment, the thicker part corresponds to the stationary portion 23, and the thinner part corresponds to the movable portion 21.

Preferably, the thicker part 23 is arranged within the passage at a position more downstream than the thinner part 21. In particular, the thicker part 23 is arranged on a trailing edge of the vane opposite to the wheel 11.

Preferably, the stationary portion 23 is orientated for an optimum "Beta-angle" which is a well-known parameter in the technical field of turbochargers.

For cost reasons, an integrated actuator for activating the vanes is used instead of an external actuator which requires a complex and expensive mechanism. The integrated actuator, as it is shown in Figs. 1 and 2, is composed of a diaphragm 5, a pressure chamber 7, a spring member 9, a clip 16, a cover 17 and a PWM-valve (pulse width modulating valve) 18.

On one side of the movable portion 1 of the vane, the pressure chamber 7 is defined. This pressure chamber communicates with the inlet and/or outlet of the fluid or a pressure generating device (not shown). Inside the pressure chamber 7, the spring member 9 is provided. The spring member 9 is supported between a stationary wall of the housing 15 and the movable diaphragm 5. The diaphragm 5 supports the movable portion 1 of the vane such that the spring member 9 urges the movable portion 1; 21 of the vane towards the closing direction.

By changing the ratio between the pressures on both sides of the diaphragm 5, the position of the movable portion 1 of the vane relative to the stationary portion 3 thereof is adjustable.

The control strategy of the compressor of the turbocharger according to the present invention is described as follows.

Close to a surge line (relative low flow), the pressure P1 in the volute 13 will increase until it reaches a maximum boost. In this part, the pressure P1 increases from the atmospheric pressure Patm to the maximum pressure P1max, and the vanes are closed. A P1-signal is balanced on both sides of the diaphragm 5 (PWM = 0 with no pressure signal leak to the outside). The spring member 9 keeps the vanes closed.

When a larger diffuser function is needed, i.e. to give higher flow capacity, the vanes (the movable portions) open. This is the result of having the P1-signal acting on the vane side, and PWM > 0%, that means a lower pressure on the backside of the diaphragm 5. The pressure P1 generated on the diaphragm 5 balances the spring force, and the vanes open.

Alternatively, the adjustment movement can be achieved gradually in accordance with the pressure differences on both sides of the diaphragm 5. That is, by the pressures acting on the sides of the diaphragm 5 and the urging force of the spring member 9, the position of the movable portion 1; 21 of the vane relative to the stationary portion 3 thereof is determined.

Although not shown, the vane according to the present invention can be applied for turbochargers, superchargers and electrically assisted/driven compressors.

Alternatively, the thicker part, which is on the downstream side of the compressor, may be constituted by a movable portion, whereas the thinner part on the downstream side of the compressor may be constituted by a stationary portion.

The stationary portion 23 may be formed in a circular shape, an oval shape or with sharp edges.

The stationary portion 23 and the movable portion 21 may be positioned at a relative angle or in an aligned manner.

Preferably, the vanes provide a so-called "zero clearance" of the nozzle in the closed position. That is, the movable portion of the vanes can contact the outer wall of the nozzle device which is constituted by the compressor housing.

The integrated actuator is not limited to the above-described structure and can have a different construction as long as the functions and effects of the present invention can be achieved.

## Claims

1. A compressor of a turbocharger having a variable nozzle device comprising an annular arrangement of vanes (1, 3; 21, 23) disposed in a nozzle formed between an inner wall and an outer wall forming a passage therebetween, wherein a portion of at least one vane (1, 3; 21, 23) is movable into and out of said passage substantially in the direction of the interval between the inner and the outer wall,
**characterized in that**
the position of the movable portion (1; 21) of said vane (1, 3; 21, 23) is adjustable in said passage corresponding to the pressure at the inlet and/or outlet of said passage.

2. A compressor according to claim 1, wherein said movable portion (1; 21) slides on a stationary portion (3; 23) of said vane (1, 3; 21, 23).

3. A compressor according to claim 2, wherein one of said stationary portion (3; 23) and movable portion (1; 21) is thicker than the other one of said stationary portion (3; 23) and movable portion (1; 21), and is arranged on a upstream side of said passage.

4. A compressor according to claim 3, wherein the other one of said stationary portion (3; 23) and movable portion (1; 21) has a wing-like cross-sectional shape and is arranged on a downstream side of said passage.

5. A compressor according to claim 1, wherein said movable portion (1; 21) of said vane (1, 3; 21, 23) is movable into and out of said passage in response to a change of the pressure at the inlet and/or outlet of said passage.

6. A compressor according to one of claims claim 1-5, wherein said movable portion (1; 21) of said vane (1, 3; 21, 23) is supported on a diaphragm (5) defining a pressure chamber (7) communicated to a pressure changing device.

7. A compressor according to claim 6, wherein said diaphragm (5) is provided with a spring member (9) urging said movable portion (1) of said vane into said passage.

## Patentansprüche

1. Verdichter eines Turboladers mit einer variablen Düsenvorrichtung, die eine ringförmige Anordnung von Schaufeln (1, 3; 21, 23) aufweist, die in einer Düse angeordnet sind, die zwischen einer Innenwand und einer Außenwand ausgebildet ist, die dazwischen einen Durchgang ausbilden, wobei ein Abschnitt von zumindest einer Schaufel (1, 3; 21, 23) in den Durchgang und aus diesem heraus im Wesentlichen in die Richtung des Intervalls zwischen der Innen- und der Außenwand bewegbar ist,
**dadurch gekennzeichnet, dass**
die Position des bewegbaren Abschnitts (1; 21) der Schaufel (1, 3; 21, 23) in dem Durchgang entsprechend dem Druck an dem Einlass und/oder dem Auslass des Durchgangs einstellbar ist.

2. Verdichter gemäß Anspruch 1, wobei der bewegbare Abschnitt (1; 21) an einem stationären Abschnitt (3; 23) der Schaufel (1, 3; 21, 23) gleitet.

3. Verdichter gemäß Anspruch 2, wobei einer von dem stationären Abschnitt (3; 23) und von dem bewegbaren Abschnitt (1; 21) dicker als der andere von dem stationären Abschnitt (3; 23) und von dem bewegbaren Abschnitt (1; 21) ist und an einer stromaufwärtigen Seite des Durchgangs angeordnet ist.

4. Verdichter gemäß Anspruch 3, wobei der andere von dem stationären Abschnitt (3; 23) und von dem bewegbaren Abschnitt (1; 21) eine tragflächenförmige Querschnittsgestalt hat und an einer stromabwärtigen Seite des Durchgangs angeordnet ist.

5. Verdichter gemäß Anspruch 1, wobei der bewegbare Abschnitt (1; 21) der Schaufel (1, 3; 21, 23) in den Durchgang und aus diesem heraus als Reaktion auf eine Änderung des Drucks an dem Einlass und/oder Auslass des Durchgangs bewegbar ist.

6. Verdichter gemäß einem der Ansprüche 1-5, wobei der bewegbare Abschnitt (1; 21) der Schaufel (1, 3; 21, 23) an einer Membran (5) gestützt ist, die eine Druckkammer (7) definiert, die mit einer Druckänderungsvorrichtung in Verbindung steht.

7. Verdichter gemäß Anspruch 6, wobei die Membran (5) mit einem Federelement (9) versehen ist, das den bewegbaren Abschnitt (1) der Schaufel in den Durchgang vorspannt.

## Revendications

1. Compresseur pour un turbocompresseur comportant un dispositif formant tuyère variable comprenant une configuration annulaire de palettes (1, 3; 21, 23) disposées dans une tuyère formée entre une paroi intérieure et une paroi extérieure qui définissent un passage entre elles, une partie d'au moins une palette (1, 3; 21, 23) étant mobile pour pénétrer dans ledit passage et sortir de celui-ci sensiblement dans la direction de l'intervalle entre les parois intérieure et extérieure,
**caractérisé en ce que**
la position de la partie mobile (1; 21) de ladite palette (1, 3; 21, 23) est ajustable dans ledit passage en correspondance avec la pression au niveau de l'entrée et/ou la sortie dudit passage.

2. Compresseur selon la revendication 1, dans lequel ladite partie mobile (1; 21) coulisse sur une partie fixe (3; 23) de ladite palette (1, 3; 21, 23).

3. Compresseur selon la revendication 2, dans lequel l'une desdites parties fixe (3; 23) et mobile (1; 21) est plus épaisse que l'autre desdites parties fixe (3; 23) et mobile (1; 21) et est disposée du côté amont dudit passage.

4. Compresseur selon la revendication 3, dans lequel l'autre desdites parties fixe (3; 23) et mobile (1; 21) présente une configuration en coupe transversale en forme d'aile et est disposée du côté aval dudit passage.

5. Compresseur selon la revendication 1, dans lequel ladite partie mobile (1; 21) de ladite palette (1, 3; 21, 23) est mobile pour pénétrer dans ledit passage et sortir de celui-ci en réponse à une variation de la pression au niveau de l'entrée et/ou la sortie dudit passage.

6. Compresseur selon l'une quelconque des revendications 1 à 5, dans lequel ladite partie mobile (1; 21) de ladite palette (1, 3; 21, 23) est montée sur un diaphragme (5) qui définit une chambre de pression (7) mise en communication avec un dispositif de variation de pression.

7. Compresseur selon la revendication 6, dans lequel ledit diaphragme (5) est muni d'un élément formant ressort (9) qui sollicite ladite partie mobile (1) de ladite palette pour qu'elle pénètre dans ledit passage.
